# EUROPÄISCHE PATENTANMELDUNG

(11) **EP 2 589 684 A1**
(43) Veröffentlichungstag der Anmeldung: **08.05.2013**
(21) Anmeldenummer: 12190389.2
(22) Anmeldetag: 29.10.2012
(51) Int. Cl.: C25B 11/04, C02F 1/461, C02F 1/467

(54) **Elektrode, ihre Verwendung und elektrochemische Zelle**

(30) Priorität: 03.11.2011 AT 16282011
(71) Anmelder: pro aqua Diamantelektroden Produktion GmbH & Co KG, 8712 Niklasdorf (AT)
(72) Erfinder: Schelch, Michael, 8600 Oberaich (AT); Staber, Wolfgang, 8600 Bruck an der Mur (AT); Hermann, Robert, 8600 Oberaich (AT); Wesner, Wolfgang, 1220 Wien (AT)
(74) Vertreter: Vinazzer, Edith

(57) **Zusammenfassung**

Die Erfindung betrifft eine Elektrode für eine elektrochemische Zelle, welche ein Stück eines aus dotiertem Titandioxid gezüchteten Einkristalles ist oder eine Vielzahl von aus dotiertem Titandioxid gezüchteten Einkristallen (2) enthält.

## Beschreibung

Die Erfindung betrifft eine Elektrode für eine elektrochemische Zelle, ihre Verwendung und eine elektrochemische Zelle.

In elektrochemischen Zellen werden üblicherweise Elektroden mit einer Mischoxidbeschichtung eingesetzt, welche als Trägermetall vor allem Titan oder Niob aufweisen, auf welchem Edelmetalloxide der Platingruppe mit anderen Ventilmetallen, wie Aluminium, Tantal, Niob, Mangan, Titan, Bismut, Antimon, Zink, Cadmium, Zirconium, Wolfram, Zinn, Eisen, Silber und Silizium, appliziert werden. Für chloridfreie Elektrolyte werden üblicherweise Iridium-Mischoxid-Beschichtungen, für die Erzeugung von Chlor und Hypochlorid Ruthenium- oder Iridium/Ruthenium-Mischoxid-Beschichtungen verwendet. Es ist weiters bekannt, platinierte Titan- bzw. Niobanoden für bestimmte Anwendungen, wie die Hartverchromung, die Edelmetallbeschichtung oder die Rückgewinnung von Metallen, einzusetzen. Derartige Anoden bestehen aus einem Titan - oder Niobträger in der Form von Streckmetall, in Stabform, in Drahtform, in Rohrform oder dergleichen, auf welchen Platin oder Edelmetalloxide in Schichtdicken bis 20 µm in mehreren Arbeitsgängen aufgebracht werden. Die Lebensdauer dieser Anoden hängt insbesondere vom Arbeitsmedium, dem Elektrolyten, und der anodischen Stromstärke ab und ist durch die schrittweise Abtragung der aufgebrachten Schicht sowie durch die Änderung der Polarität beim Betrieb begrenzt.

Es ist ferner bekannt, in elektrochemischen Zellen Diamantelektroden aus dotierten Diamantpartikeln, welche in eine nicht leitende Trägerschicht eingebettet sind, zu verwenden. Solche Diamantelektroden zeichnen sich durch eine hohe Überspannung für Sauerstoff und Wasserstoff aus und sind daher für eine Vielzahl von Oxidationsprozessen in wässriger Lösung besonders geeignet. Eine Diamantelektrode aus synthetisch hergestellten, elektrisch leitfähigen, Bor-dotierten Diamantpartikeln ist beispielsweise aus der WO 2004/005585 A1 bekannt. Bei dieser Diamantelektrode sind die Diamantpartikel oberflächlich in eine Metall- oder Metalllegierungschicht eingebettet. Aus der WO 2007/116014 A2 ist eine Diamantelektrode bekannt, bei welcher die dotierten Diamantpartikel in eine nicht leitende Trägerschicht eingebettet sind und an beiden Seiten der Trägerschicht freigelegt sind. Eine Diamantelektrode auf Kunststoffbasis für elektrochemische Anwendungen ist aus der WO 2006/116298 A1 bekannt. Diese Elektrode weist zumindest an ihrer Oberfläche eine Schicht aus synthetisch hergestellten dotierten Diamantpartikeln auf. Der grundsätzlich nicht leitende Kunststoffgrundkörper kann durch Zumischen von leitfähigen Bestandteilen elektrisch leitfähig gemacht werden.

Solche Diamantelektroden haben sich in der Praxis gut bewährt, da sie ausgesprochen beständig sind und eine höhere Lebensdauer als die oben beschriebenen metallischen Elektroden aufweisen.

Der Erfindung liegt die Aufgabe zugrunde, eine Elektrode bereitzustellen, welche eine höhere Lebensdauer aufweist, als die bislang bekannten Elektroden.

Gelöst wird die gestellte Aufgabe erfindungsgemäß dadurch, dass die Elektrode ein Stück eines aus dotiertem Titandioxid gezüchteten Kristalles ist oder eine Vielzahl von aus dotiertem Titandioxid gezüchteten Kristallen enthält.

Aus dotiertem Titandioxid in Kristallform lassen sich Elektroden herstellen bzw. zur Verfügung stellen, welche eine ausgesprochen hohe Lebensdauer, die bei weitem die Lebensdauer der bekannten Elektroden übersteigt, aufweisen.

Von besonderem Vorteil ist, dass das Kristallstück eine aus dem gezüchteten Kristall geschnittene Kristallplatte sein kann. Solche Elektroden lassen sich in verschiedenen Formen, Größen und Stärken, insbesondere in einer Stärke von 0,5 mm bis 10 mm, vorzugsweise bis 3 mm, aus dem gezüchteten Kristall zurechtschneiden.

Bei einer Elektrode aus einer Vielzahl von Kristallen sind diese einlagig in eine Trägerschicht aus einem nicht leitenden Material eingebettet, wobei die Kristalle an beiden Seiten der Trägerschicht freigelegt sind. Auch bei dieser Ausführung ist eine hohe Lebensdauer gewährleistet.

Als Material für die Trägerschicht (1) kommen insbesondere Polytetrafluorethylen (Teflon), Polyvinylidenflourid (PVDF), Perfluoralkoxylalkan (PFA), fluoriertes Ethylenprophylen (FEP), Ethylen-Tetrafluorethylen (ETFE), Polyetheretherketon (PEEK), Polyphenylensulfid (PPS), Polyethylen (PE), Polypropylen (PP) oder Polyvinylchlorid (PVC) in Frage.

Die in die Trägerschicht eingebetteten Kristalle weisen erfindungsgemäß eine Korngröße zwischen 100 µm und 5 mm, insbesondere zwischen 200 µm und 800 µm, auf und werden in dieser Größe gezüchtet. Die Korngröße wird dabei an die Dicke der Trägerschicht angepasst.

Zur Dotierung des Titandioxids wird gemäß der Erfindung eines der Elemente Lithium, Niob, Aluminium, Phosphor, Gallium, Bur, Arsen, Indium, Germanium, Iridium, Ruthenium, Rhodium, Antimon, Stickstoff, Mangan, Eisen, Kobalt, Nickel, Chrom oder Yttrium oder deren Oxide oder Fluoride verwendet.

Erfindungsgemäße Elektroden eignen wegen ihrer hohen Lebensdauer vor allem zur Verwendung als Randelektroden in einer elektrochemischen Zelle und zwar sowohl als Anode als auch als Kathode.

Vorteilhaft ist auch die Verwendung einer erfindungsgemäßen Elektrode als bipolare Elektrode in einer elektrochemischen Zelle.

Die Erfindung betrifft ferner eine elektrochemische Zelle, welche als Randelektrode(n) eine Elektrode bzw. Elektroden enthält, welche erfindungsgemäß ausgeführt ist bzw. sind. Die elektrochemische Zelle kann außerdem zumindest eine Diamantelektrode als bipolare Elektrode enthalten.

Bei einer alternativen Ausführung einer elektrochemischen Zelle enthält diese als bipolare Elektrode(n) eine Elektrode bzw. mehrere Elektroden, welche erfindungsgemäß ausgeführte Elektroden sind.

Weitere Merkmale, Vorteile und Einzelheiten der Erfindung ergeben sich aus der nachfolgenden Beschreibung und werden anhand der schematischen Zeichnung, die Ausführungsbeispiele darstellt, näher beschrieben. Dabei zeigen
Fig. 1 eine Schnittdarstellung eines Abschnittes einer erfindungsgemäßen Elektrode und
Fig. 2 eine Schnittansicht während der Herstellung der Elektrode.

Die Erfindung befasst sich mit der Herstellung und Ausführung einer Elektrode -Anode oder Kathode - für eine elektrochemische Zelle. Die Elektrode soll eine wesentlich höhere Lebensdauer als die bislang bekannten Elektroden mit Mischoxidbeschichtung aufweisen.

Bei einer Ausführungsform der Erfindung besteht die Elektrode aus einem insbesondere plattenförmigen Stück eines aus dotiertem Titandioxid (TiO₂) gezüchteten Einkristalls. Zur Herstellung solcher Elektroden werden entsprechend große Kristalle gezüchtet, welche in die gewünschte Form, beispielsweise rechteckig oder rund, und mit der gewünschten Dicke, insbesondere zwischen 0,5 mm und 10mm, vorzugsweise bis zu 3 mm, geschnitten werden. Die Dotierung erfolgt im Ausgangsmaterial oder während der Kristallzüchtung in der Schmelze. Für die zur Erzielung der elektrischen Leitfähigkeit notwendigen Dotierung kommt eine Vielzahl von Elementen in Frage, beispielsweise Lithium, Niob, Aluminium, Phosphor, Gallium, Bor, Arsen, Indium, Germanium, Iridium, Ruthenium, Rhodium, Antimon, Stickstoff, Mangan, Eisen, Cobalt, Nickel, Chrom oder Yttrium oder die Oxide oder Fluoride der genannten Elemente. Es kommen somit jene Elemente bzw. deren Oxide/Fluorode in Frage, die drei- oder fünfwertig sind. Besonders geeignet sind Iridium und Ruthenium.

Zur Züchtung der Titandioxid-Kristalle kommen die zur Züchtung von Einkristallen bekannten Verfahren in Frage, insbesondere die Verfahren zur Kristallzüchtung aus einer Schmelze, wie das Verfahren von Bridgman-Stockbarger. Dieses Verfahren gestattet die Züchtung von Einkristallen auf einem qualitativ und quantitativ hohen Niveau.

Bei einer anderen Ausführungsform der Erfindung besteht die Elektrode aus in ein Trägermaterial aus einem nichtleitenden Kunststoff eingebetteten kleinen, aus dotiertem Titandioxid gezüchteten Einkristallen 2.

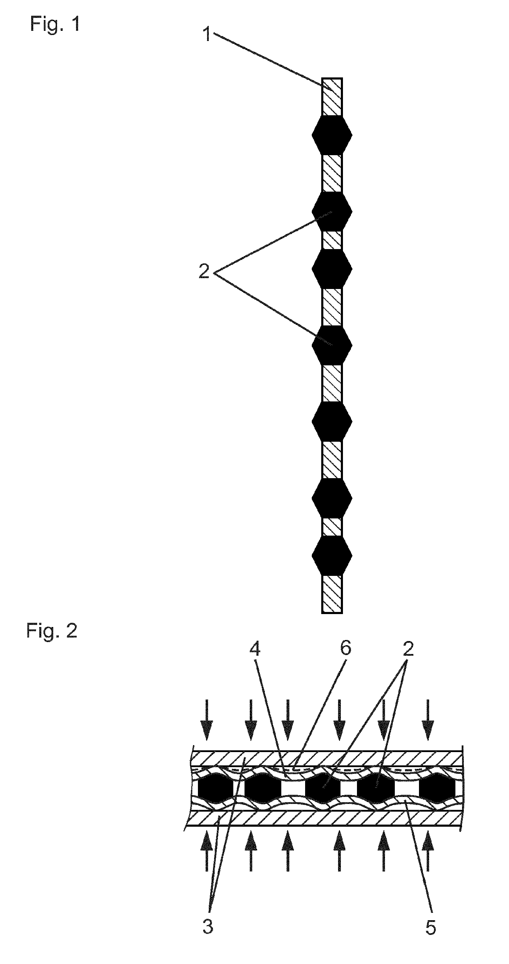

Fig. 1 zeigt eine Ausführungsform einer derartigen Elektrode, wobei die Kristalle 2 einlagig und ohne gegenseitigen Kontakt miteinander in eine Kunststoff-Trägerschicht 1 eingebettet sind und beidseitig aus der Trägerschicht 1 etwas herausragen und freigelegt sind.

Die Kristalle 2 können Korngrößen zwischen etwa 100 µm bis einige Millimeter, insbesondere bis zu 5 mm, aufweisen. Bevorzugt sind Korngrößen zwischen 200 µm und 800 µm. Für eine bestimmte Elektrode werden Kristalle 2 mit im Wesentlichen übereinstimmender Korngröße verwendet, wobei die Dicke der Trägerschicht 1 an die Korngröße angepasst ist. Die Kristalle 2 sind mit einem der oben erwähnten Dotierungselemente, deren Oxide oder Fluoride dotiert und daher elektrisch leitfähig. Die Kristalle 2 werden in der gewünschten Korngröße nach bekannten Verfahren als Einkristalle gezüchtet.

Das Ausgangsmaterial für die Trägerschicht 1 sind bei einer bevorzugten Ausführungsform Folien aus chemisch stabilen Polymeren, insbesondere Polytetrafluorethylen (Teflon), Polyvinylidenflourid (PVDF), Perfluoralkoxylalkan (PFA), fluoriertes Ethylenpropylen (FEP), Ethylen-Tetrafluorethylen (ETFE), Polyetheretherketon (PEEK), Polyethylen (PE), Polypropylen (PP), Polyvinylchlorid (PVC) oder Polyphenylensulfid (PPS). Zur Herstellung der Trägerschicht 1 werden zwei Folien 4, 5 bzw. Folienbahnen aus dem gleichen Material in einer auf die Kristallgrößen abgestimmten Stärke verwendet. Auf eine waagrecht bzw. im Wesentlichen waagrecht und eben positionierten Folie 4 wird eine Lage von Kristallen 2 aufgebracht. Anschließend wird die zweite Folie 5 auf die mit den Kristallen 2 versehene erste Folie 4 gelegt und die beiden Folien 4, 5 werden miteinander zwischen den Kristallen 2 verbunden. Das Verbinden der beiden Folien 4, 5 erfolgt vorzugsweise unter beidseitigem Aufbringen von Druck, indem beispielsweise auf den Folienverbund in einer Presse oder zwischen zwei Walzen Druck ausgeübt wird. Werden die Folien dabei auch erhitzt, schmelzen sie auf und verbinden sich miteinander. Sind durch den beidseitig aufgebrachten Druck die Kristalle 2 auf beiden Seiten bereits freigelegt, ist keine Nachbehandlung erforderlich. Es ist jedoch möglich, die Kristalle 2 nachträglich auf mechanische, chemische oder thermische Weise freizulegen.

Um ein nachträgliches Freilegen der Kristalle 2 zu vermeiden, ist es vorteilhaft, wenn sämtliche Kristalle 2 bereits beim Zusammenfügen der beiden Folien 4, 5 an den Folienaußenseiten freigelegt werden. Bei einer bevorzugten Ausführungsform wird daher die erste Folie 4 auf eine dünne Platte 3 eines weichen, nachgiebigen Materials aufgelegt und auf die Außenseite der zweiten bereits positionierten Folie 5 ebenfalls eine dünne Platte 3 aus diesem Material aufgelegt, wie es in Fig.2 gezeigt ist. Nun können von einer oder von beiden Seiten flächig Druck aufgebracht und Wärme zugeführt werden, sodass die Folien 4, 5 aufschmelzen und miteinander verbunden werden. Die Kristalle 2 dringen dabei durch das Folienmaterial und werden freigelegt. Als bevorzugtes Material für diese dünnen, nachgiebigen Platten 3 kommen in Frage beispielsweise Teflon (Polytetrafluorethylen), Viton und Kapton (Fluorelastomere der Firma DuPont), Neopren (Chloropren-Kauschuk (oder Polychloropren oder Chlorbutadien-Kautschuk), thermoplastische Vulkanisate (TPV), Fluorkautschuke, beispielsweise Copolymere von Vinylidenfluorid (VDF) und Hexafluorpropylen (HFP) und Terpolymere von VDF, HFP und Tetrafluorethylen (TFE), ferner fluorierte Elastomere, wie z. B. Perfluorkautschuk (FFKM), Tetraftuorethylen/Propylen-Kautschuke (FEPM) und fluorierter Silikonkautschuk (VQM), sowie Silikone, aber auch Metalle wie beispielsweise Blei, Aluminium oder Kupfer. Die Dicke der Platten 3 wird zwischen 0,2 mm bis 3 mm, insbesondere zwischen 0,5 mm und 1,5 mm gewählt. Falls erforderlich, kann nachträglich in einem weiteren Bearbeitungsschritt ein Freilegen von Kristallen 2 auf mechanische, chemische oder thermische Weise erfolgen.

Zur Erhöhung der mechanischen Festigkeit der fertigen Elektrode kann bei der Herstellung der Elektrode auf die oder unterhalb der Folie 4 und/oder auf den aufgebrachten Kristallen 2 ein- oder mehrlagig ein Stützgitter, Stützgewebe 6 oder dergleichen positioniert werden. Anschließend erfolgt, wie beschrieben, die Verbindung der beiden Folienbahnen zur Herstellung der Trägerschicht 1 und zur Freilegung der Kristalle 2. Alternativ ist es möglich, das Stützgitter, Stützgewebe 6 oder dergleichen nach der Fertigstellung der Elektrode auf einer Außenseite oder auf beiden Außenseiten der Elektrode zu befestigen, beispielsweise durch Aufkleben oder Auflaminieren. Als Material für das Stückgitter oder Stützgewebe 6 eignen sich Kunststoffe, wie Polytetrafluorethylen (Teflon), Polyvinylidenflourid (PVDF), Perfluoralkoxylalkan (PFA), fluoriertes Ethylenprophylen (FEP), Ethylen-Tetrafluorethylen (ETFE), Polyetheretherketon (PEEK) oder Polyphenylensulfid (PPS), Glasfasern, kunststoffbeschichtete Glasfasern, Keramiken oder Metalle.

Gemäß der Erfindung ausgeführte bzw. hergestellte Elektroden eignen sich vor allem für einen Einsatz in Elektrolysezellen (elektrochemischen Zellen), insbesondere zur Trinkwasseraufbereitung, zur Desinfektion von Trinkwasser, zur Wasseraufbereitung durch anodische Oxidation, zur Herstellung von Oxidationsmitteln sowie zur Elektrolyse von Wasser und zur elektrochemischen Herstellung von Ozon und Chlor. Eine bevorzugte Verwendung ist ihr Einsatz in elektrochemischen Zellen zur Reinigung von Wasser in Schwimmbecken, Whirlpools oder Hot-Tubs.

Aus einem Kristallstück bestehende Elektroden eignen sich vor allem als Randelektroden, die in eine Trägerschicht eingebettete Kristalle aufweisenden Elektroden als bipolare Elektroden. Auf eine Randelektrode kann einseitig eine elektrisch leitende Kontaktierungsschicht angebracht werden, die es ermöglicht, den Kristall optimal und dauerhaft mit Strom zu versorgen.

Es ist ferner möglich, in einer elektrochemischen Zelle erfindungsgemäße Elektroden mit Elektroden aus dem Stand der Technik zu kombinieren, beispielsweise Diamantelektroden als Randelektroden oder als bipolare Elektroden einzusetzen.

### Bezugsziffernliste

- 1: Trägerschicht
- 2: Kristall
- 3: Platte
- 4: Folie
- 5: Foli
- 6: Stützgitter

## Patentansprüche

1. Elektrode für eine elektrochemische Zelle,
**dadurch gekennzeichnet,**
**dass** sie ein Stück eines aus dotiertem Titandioxid gezüchteten Einkristalles ist oder eine Vielzahl von aus dotiertem Titandioxid gezüchteten Einkristallen (2) enthält.

2. Elektrode nach Anspruch 1, **dadurch gekennzeichnet, dass** das Kristallstück eine aus dem gezüchteten Kristall geschnittene Kristallplatte ist.

3. Elektrode nach Anspruch 2, **dadurch gekennzeichnet, dass** die Dicke der Kristallplatte zwischen 0,5 mm und 10 mm, insbesondere bis zu 3 mm, beträgt.

4. Elektrode nach Anspruch 1, **dadurch gekennzeichnet, dass** die Vielzahl an Kristallen einlagig in eine Trägerschicht (1) aus einem nicht leitenden Material eingebettet ist, wobei die Kristalle (2) an beiden Seiten der Trägerschicht (1) freigelegt sind.

5. Elektrode nach Anspruch 1 oder 4, **dadurch gekennzeichnet, dass** die Kristalle (2) eine Korngröße zwischen 100 µm und 5 mm, insbesondere zwischen 200 µm und 800 µm aufweisen, wobei die Korngröße an die Dicke der Trägerschicht (1) angepasst ist.

6. Elektrode nach einem der Ansprüche 1 bis 5, **dadurch gekennzeichnet, dass** das Titandioxid mit Lithium, Niob, Aluminium, Phosphor, Gallium, Bor, Arsen, Indium, Germanium, Iridium, Ruthenium, Rhodium, Antimon, Stickstoff, Mangan, Eisen, Kobalt, Nickel, Chrom oder Yttrium oder mit den Oxiden oder Fluoriden der genannten Elemente dotiert ist.

7. Elektrode nach Anspruch 4 oder 5, **dadurch gekennzeichnet, dass** die Trägerschicht (1) aus Polytetrafluorethylen (Teflon), Polyvinylidenflourid (PVDF), Perfluoralkoxylalkan (PFA), fluoriertes Ethylenprophylen (FEP), Ethylen-Tetrafluorethylen (ETFE), Polyetheretherketon (PEEK), Polyphenylensulfid (PPS), Polyethylen (PE), Polypropylen (PP) oder Polyvinylchlorid (PVC) besteht.

8. Verwendung der Elektrode nach einem der Ansprüche 1 bis 3 oder 6 als Randelektrode in einer elektrochemischen Zelle.

9. Verwendung der Elektrode nach Anspruch 8 als Anode.

10. Verwendung der Elektrode nach Anspruch 8 als Kathode.

11. Verwendung der Elektrode nach einem der Ansprüche 1 oder 4 bis 7 als bipolare Elektrode in einer elektrochemischen Zelle.

12. Elektrochemische Zelle, welche als Randelektrode(n) eine Elektrode bzw.
Elektroden enthält, welche gemäß einem oder mehreren der Ansprüche 1 bis 3 oder 6 ausgeführt ist bzw. sind.

13. Elektrochemische Zelle nach Anspruch 12, welche zumindest eine Diamantelektrode als bipolare Elektrode enthält.

14. Elektrochemische Zelle, welche als bipolare Elektrode(n) eine Elektrode bzw. Elektroden enthält, welche gemäß einem oder mehreren der Ansprüche 1 oder 4 bis 7 ausgeführt ist bzw. sind.
